# EUROPEAN PATENT APPLICATION

(11) **EP 0 600 733 A2**
(43) Date of publication of application: **08.06.1994**
(21) Application number: 93309651.3
(22) Date of filing: 02.12.1993
(51) Int. Cl.: G11B 20/18, G11B 19/04, H04N 7/133, G11B 20/10, G11B 27/00

(54) **Data recording apparatus**

(30) Priority: 04.12.1992 JP 350852/92
(71) Applicant: SONY CORPORATION, Tokyo (JP)
(72) Inventor: Kitazawa, Toshihiko, Int.Property Div.Legal and, Shinagawa-ku, Tokyo 141 (JP); Yonemitsu, Jun, Int.Property Div.Legal and, Shinagawa-ku, Tokyo 141 (JP); Akiyama, Yoshiyuki, Int.Property Div.Legal and, Shinagawa-ku, Tokyo 141 (JP)
(74) Representative: Cotter, Ivan John

(57) **Abstract**

A data recording apparatus for recording image data onto a recording medium (10) comprising a storage unit (2) for storing the image data; a read operation controller (4) for reading, each time the image data has been stored in the storage unit in a predetermined amount, the image data by said predetermined amount; a recorder (9) for recording the image data read from the storage unit onto the recording medium by the predetermined amount; and an abnormal condition detector (7, 13) for detecting an abnormal condition from the image data when recording the image data onto the recording medium by the predetermined amount; wherein the read operation controller rereads the image data by the predetermined amount from the storage unit in accordance with the abnormal condition detected by the abnormal condition detector.

## Description

The present invention relates to a data recording apparatus suitable for use in recording image data which is transmitted to a recording medium such as a disc at a variable rate.

It is known that, when digitizing a time-varying image for example and recording a digitized result on a disc, the data may be compressed and encoded to reduce its transmission time and storage space.

In an encoder for compressing and encoding image data, more codes are used when encoding a more complicated image than the codes needed for encoding a less complicated image. That is, an image is encoded at a variable rate, thereby providing a decoded image having a substantially uniform picture quality.

Meanwhile, it is necessary, when recording image data to a recording medium such as a disc, to transmit the data at a constant rate.

To record the variable-rate image data encoded by the above-mentioned encoder onto the disc, a buffer unit is provided in an output stage of the encoder to temporarily hold the variable-rate image data.

By reading the image data from the buffer at a predetermined rate, a variation in an amount of occurrence of the image data outputted from the encoder is absorbed to some degree before the image data is recorded on the disc.

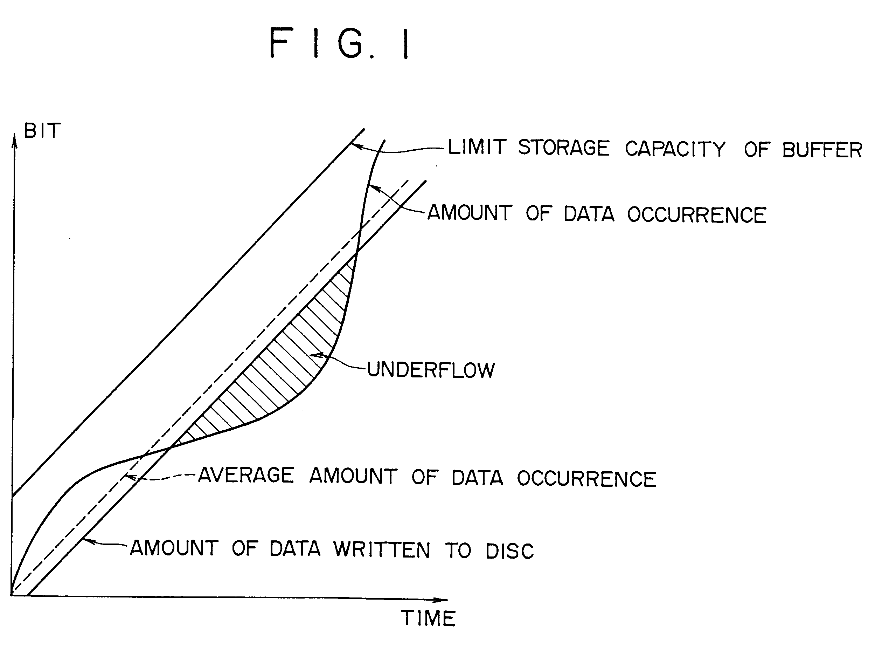

However, referring to Fig. 1, when simple images are consecutively encoded, the amount of occurrence of the image data to be outputted from the encoder decreases to cause the buffer to underflow (indicated by a hatched portion in the figure), resulting in the image data being intermittently recorded on the disc.

To solve such a problem, a method is known in which data called "stuffing bits" are generated to stuff the image data before being recorded on the disc. This method is equivalent to macroblock_stuffing described in ISO/IEC 11172-2, a protocol of MPEG1 (Moving Pictures Experts Group 1), for example.

In this method, however, stuffing bits are recorded on the disc as intrinsically unnecessary data, thereby reducing the amount of image data that can be recorded on the disc.

Japanese Non-examined Patent Publication No. 4-318786 discloses a method in which variable-rate information to be recorded is first stored in a buffer and, when an amount of the information has exceeded a predetermined buffer storage level, the information is recorded on the disc for a certain period of time; when the information amount has not exceeded the buffer storage level, recording of the information to a next track is suspended until the buffer storage amount level is exceeded. This prevents the buffer from underflowing without using stuffing bits.

However, this method also has a problem that, if there is abnormal disc rotation or image data error is caused by a vibration for example during image data recording, correct image data cannot be recorded.

In accordance with one aspect of the invention there is provided a data recording apparatus for recording image data onto a recording medium, comprising:
storage means for storing the image data;
read operation control means for reading, each time said image data has been stored in said storage means by a predetermined amount, said image data by said predetermined amount;
recording means for recording said image data read from said storage means onto said recording medium by said predetermined amount; and
abnormal condition detecting means for detecting an abnormal condition from said image data when recording said image data onto said recording medium by said predetermined amount;
wherein said read operation control means rereads said image data by said predetermined amount from said storage means in accordance with said abnormal condition detected by said abnormal condition detecting means.

In accordance with another aspect of the invention there is provided a data recording method for recording image data onto a recording medium, comprising the steps of:
storing the image data;
reading, each time said image data has been stored in a predetermined amount, said image data in said predetermined amount;
recording said read image data onto said recording medium by said predetermined amount;
detecting an abnormal condition from said image data of said predetermined amount when recording said image data onto said recording medium;
rereading said image data by said predetermined amount in accordance with said detected abnormal condition; and
rerecording said reread image data of said predetermined amount onto said recording medium.

In accordance with a further aspect of the invention there is provided a recording medium formed by a method according to said other aspects of the invention.

Specific embodiments of the present invention will now be described by way of example with reference to the accompanying drawings, in which:
Fig. 1 is a diagram describing buffer underflow;
Fig. 2 is a block diagram illustrating a constitution of the data recording apparatus practiced as a preferred embodiment of the invention;
Fig. 3 is a block diagram of a data generator used in the embodiment of Fig. 1;
Fig. 4 is a diagram describing an image data recording operation of the data recording apparatus of Fig. 1;
Fig. 5 is a diagram describing an image data rereading operation of the data recording apparatus of Fig. 1; and
Fig. 6 is a block diagram illustrating a constitution of the data recording apparatus practised as a second preferred embodiment of the invention.

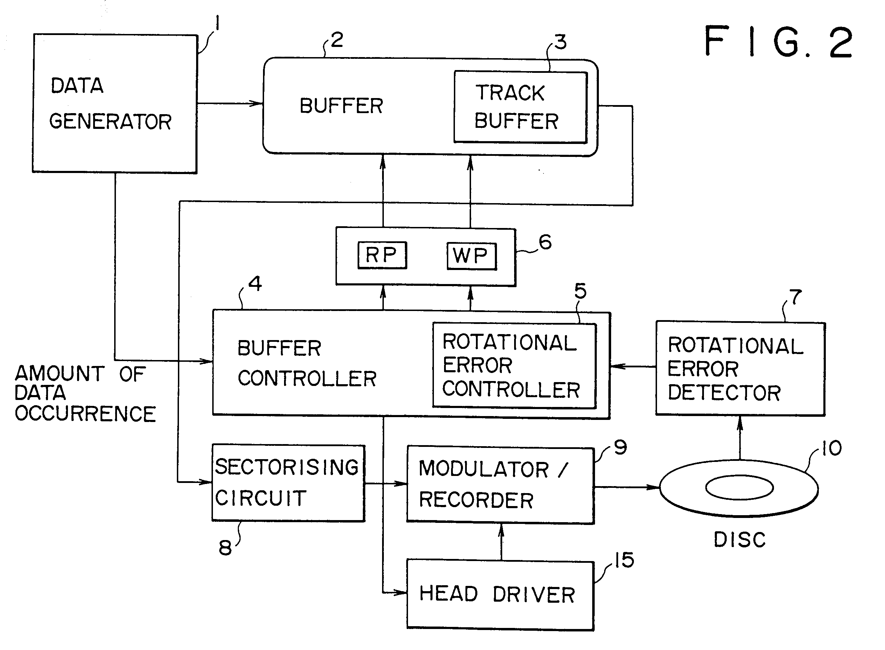

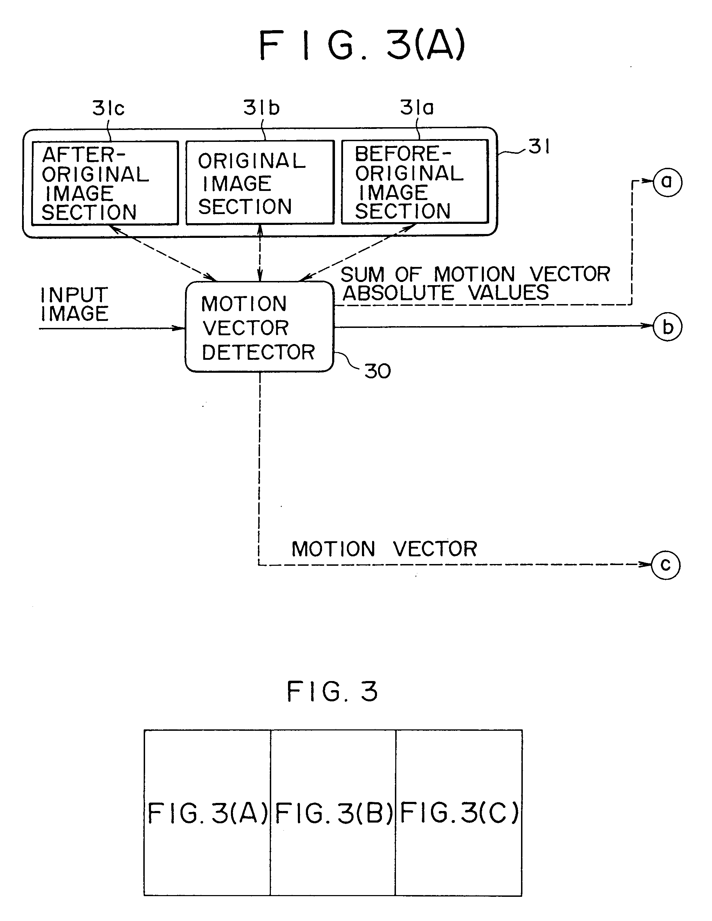

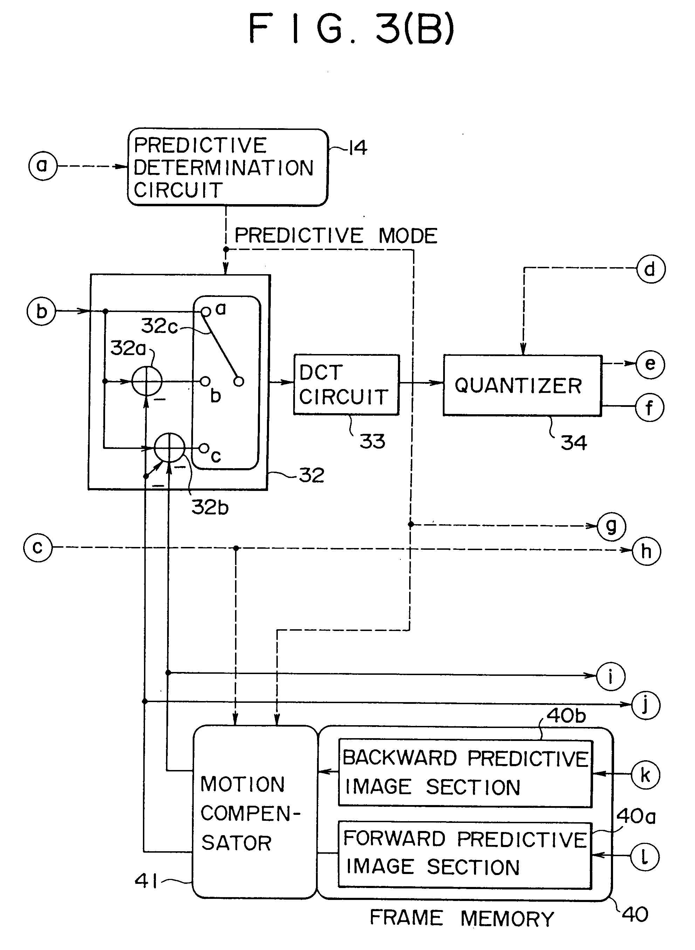

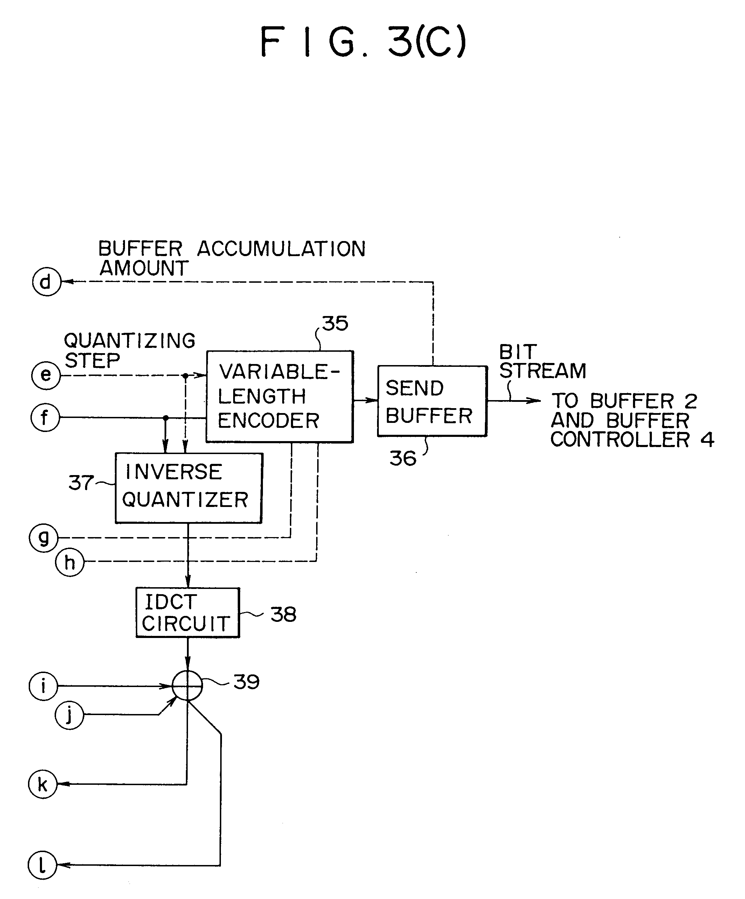

Referring to Fig. 2, there is provided a block diagram illustrating a constitution of the data recording apparatus practiced as a first preferred embodiment of the invention. A data generator 1 is constituted as shown in Fig. 3 and compresses and encodes image data by means of the MPEG scheme for example.

That is, in the data generator 1 (Fig. 3), an image (an image signal) consisting of 720 pixels (horizontal) x 480 lines (vertical) for example is divided into image data composed of blocks of 8 pixels x 8 lines each and the divided image data is supplied to a motion vector detector 30.

The motion vector detector 30 contains a frame memory 31 divided into three areas of a before-original image section 31a, an original image section 31b, and an after-original image section 31c. The detector stores a frame of image data to be encoded (hereinafter referred to as original image data) in the original image section 31b, image data one frame, for example, before the original image data (the image data one frame before being hereinafter referred to as before-original image data) in the before-original image section 31a, and image data one frame, for example, after the original image data (the image data one frame after being hereinafter referred to as after-original image data) in the after-original image section 31c.

Additionally, the motion vector detector 30 detects, on a block basis, motion vectors between the original image data stored in the original image section 31b in the frame memory 31 and the before-original image data stored in the before-original image section 31a or the after-original image data stored in the after-original image section 31c. The detector outputs the detected motion vectors to a variable-length encoder 35 and a motion compensator 41. Here, selected as optimum one is a motion vector in the case where an absolute value of a sum of differences between images on a block basis is minimized. This absolute value of the sum is also supplied to a predictive determination circuit 14.

The original image data stored in the original image section 31b of the frame memory 31 is supplied to a DCT (Discrete Cosine Transform) circuit 33 via an arithmetic section 32 composed of arithmetic units 32a and 32b and a switch 32c. In this circuit, the original image data is discrete cosine transformed into a DCT coefficient. The DCT coefficient is put in a quantizer 34 to be quantized by a quantizing step corresponding to a data accumulation amount (buffer accumulation amount) of a send buffer 36. The quantized data is then sent to the variable-length encoder 35.

The quantized data (the DCT coefficient) obtained by the quantizer 34 is also supplied to an inverse quantizer 37 to be inversely quantized by following the quantizing step of the quantizer 34. The inversely quantized data is put in an IDCT circuit 38 to be inversely discrete cosine transformed. The data thus transformed is put in an arithmetic unit 39.

If the image data entered in the arithmetic unit 39 is intra-coded data, the data itself outputted from the IDCT circuit 38 is stored in a frame memory 40.

If the image data entered in the arithmetic unit 39 is forward predictively encoded data, the arithmetic unit 39 adds the data outputted from the IDCT circuit 38 to predictive image data coming from a forward predictive image section 40a in the frame memory 40 via the motion compensator 41. A result of the addition is stored in the frame memory 40.

If the image data entered in the arithmetic unit 39 is bidirectionally predictively encoded data, the arithmetic unit 39 adds the data outputted from the IDCT circuit 38, the predictive image data coming from the forward predictive image section 40a via the motion compensator 41, and predictive image data coming from a backward predictive image section 40b via the motion compensator 41. A result of the addition is stored in the frame memory 40.

Thus, the locally decoded data obtained by decoding the data encoded by the arithmetic section 32, the DCT circuit 33, and quantizer 34 is stored in the frame memory 40 as predictive image data to be entered in the arithmetic section 32.

On the other hand, based on the absolute value of the sum of differences detected on a block basis and outputted from the motion vector detector 30, the predictive determination circuit 41 determines a predictive mode for encoding the original image data stored in the original image section 31b in the frame memory 31 contained in the motion vector detector 30. That is, the predictive determination circuit 41 determines which predictive mode among the above-mentioned intra-encoding, forward predictive encoding, and bidirectional predictive encoding is to be used to encode each block if the original image data stored in the original image section 31b in the frame memory 31. Then, the predictive determination circuit 41 outputs the selected predictive mode to the switch 32c of the arithmetic section 32, the variable-length encoder 35, and the motion compensator 41.

The motion compensator 41 performs motion compensation on the data stored in the frame memory 40 according to the predictive mode outputted from the predictive determination circuit 41, thereby generating predictive image data.

If the intra-encoding predictive mode is outputted from the predictive determination circuit 41 to the switch 32c of the arithmetic section 32, a terminal a of the switch is selected. This supplies the original image data itself stored in the original image section 31b in the frame memory 31 to the DCT circuit 33 through the arithmetic section 32.

If the forward predictive encoding predictive mode is outputted from the predictive determination circuit 41 to the switch 32c of the arithmetic section 32, a terminal b of the switch is selected. This supplies, to the DCT circuit 33, a difference between the original image data stored in the original image section 31b in the frame memory 31 and the decoded predictive image data stored in the forward predictive image section 40a and located one frame before the original image data, thereby generating forward predictive encoded data.

If the bidirectional predictive encoding predictive mode is outputted from the predictive determination circuit 41 to the switch 32c of the arithmetic section 32, a terminal c of the switch is selected. This supplies, to the DCT circuit 33, a difference between the original image data stored in the original image section 31b in the frame memory 31, the locally decoded predictive image data stored in the forward predictive image section 40a in the frame memory 40 and located one frame before the original image data, and locally decoded predictive image data stored in the backward predictive image section 40b in the frame memory 40 and located one frame after the original image data, thereby generating bidirectionally predictively encoded data.

The variable-length encoder 35 converts the data and quantizing step outputted from the quantizer 34, the motion vector outputted from the motion vector detector 30, and the predictive mode outputted from the predictive determination circuit 41 into variable-length codes such as obtained by Huffman encoding for example. The converted codes are temporarily held in the send buffer 36 before being outputted at a variable rate.

A buffer 2 (Fig. 2), which is a ring buffer for example, and whose data read/write addresses are controlled by a pointer 6, sequentially stores the encoded image data outputted from the data generator 1 at the send buffer 36 of Fig. 3. A track buffer 3, of which capacity is equivalent to an amount of data for one track for example on a disc 10 is a dynamically varying storage area among storage areas of the buffer 2. When data for one track is written to the track buffer 3, the data is outputted to a sectorizing circuit 8. The data for one track is equivalent, for example, to an amount of data which is continuously recorded on the disc at a time.

It should be noted that the buffer 2 can be made to serve also as the send buffer 36 of the data generator 1 (Fig. 3). That is, referring to Fig. 3, the variable-length encoder 35 can be immediately followed by the buffer 2 without providing the data generator 1 with the send buffer 36.

A buffer controller 4 controls the pointer 6 based on an amount of the data outputted from the data generator 1, thereby controlling image data read/write operations on the buffer 2, or the track buffer 3. Also, the buffer controller 4 controls the pointer 6 based on an output signal coming from a rotational error controller 5 contained in the buffer controller. The rotational error controller 5, upon receiving a signal from a rotational error detector 7 indicating an abnormal rotation of a disc 10, sends a control signal to the buffer controller 4 to instruct the buffer controller to control the pointer 6. The pointer 6, controlled by the buffer controller 4, specifies a write address (by a write pointer WP) and a read address (by a read pointer RP) in the buffer 2, or the track buffer 3.

The rotational error detector 7 detects an abnormal condition in rotation of the disc 10 from, for example, an FG pulse coming from a spindle motor, not shown, for rotatively driving the disc 10 and notifies the rotational error controller 5 of the error.

The sectorizing circuit 8 divides the image data for one track outputted from the track buffer 3 into sectors and adds a header and an error correction code to each of them. A modulator/recorder 9 modulates the image data for one track coming from the track buffer 3 via the sectorizing circuit 8 to sequentially record the modulated data onto the disc 10 from inner-track side to outer-track side for example.

Now, an operation of the embodiment will be described. An image is encoded in the data generator 1 (the send buffer 36). The encoded image data is supplied to the buffer 2 and the buffer controller 4. Based on the amount of the image data coming from the data generator 1, the buffer controller 4 controls the write pointer (WP) of the pointer 6 to store the image data in the buffer 2.

The buffer controller 4 further references values of the read pointer (RP) and the write pointer (WP) of the pointer 6 and, when the write pointer (WP) has advanced beyond the read pointer (RP) by an image data amount for one track, regards a one-track storage area indicated between the read pointer (RP) and the write pointer (WP) as the track buffer 3, and reads the image data for one track from the track buffer.

The one-track image data read from the track buffer 3 is transferred to the sectorizing circuit 8 where it is divided into sectors to be added with a header and an error correction code. The sectorized data is supplied to the modulator/recorder 9. The modulator/recorder 9 modulates the one-track image data each time it has come from the track buffer 3 via the sectorizing circuit 8 to record the modulated data onto the disc 10.

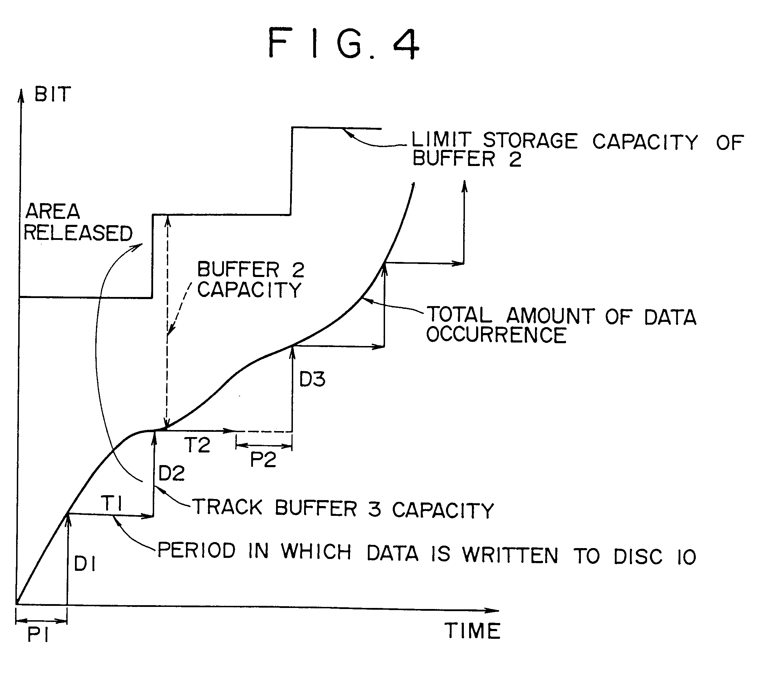

That is, if the image data (in Fig. 4, a total amount of image data occurrence is shown) is outputted from the data generator 1 at a rate shown in Fig. 4 for example, the modulator/recorder 9 is in a standby state for a period (P1) in which one-track image data D1 is being stored in the track buffer 3. That is, the modulator/recorder 9 does not perform a recording operation on the disc 10 during that period.

When the period P1 has passed, in which the one-track image data D1 has been stored in the track buffer 3, the image data D1 is supplied to the modulator/recorder 9 via the sectorizing circuit 8 to be recorded on the disc 10 in a period T1.

When one-track image data D2 (= D1) has been stored in the track buffer 3 in the buffer 2 during recording of the image data D1 onto the disc 10, or during the period T1, the storage area in the buffer 2 in which the image data D1 has been stored, or the track buffer 3, is freed.

This increments a limit storage capacity of the buffer 2 by one-track image data.

And, during period T2 (= T1), the one-track image data D2 stored in the track buffer 3 is recorded on the disc 10.

If the amount of occurrence of the data coming from the data generator 1 decreases, the image data to be stored in the track buffer 3 during the period T2 in which the image data D2 is recorded on the disc 10 may not amount to one track of data.

If this happens, the modulator/recorder 9 waits until one-track image data D3 (= D1) is stored in the track buffer 3 without performing data recording onto the disc 10. When the image data is read from the track buffer 3, a head driver 15 moves a recording head, not shown, of the modulator/recorder 9 to a position immediately after a recording position of the image data D2. That is, as shown in Fig. 4, the modulator/recorder 9 records the one-track image data D3 stored in the track buffer 3 to the position following the recording position of the image data D2 after it has been recorded and the period P2 has passed.

Likewise, remaining image data stored in the track buffer 3 are sequentially recorded onto the disc 10 on a track basis.

Thus, sequentially recording image data onto the disc 10 on a track basis allows effective usage of recording areas on the disc 10.

Meanwhile, a rotational fluctuation of the disc 10 caused by an external vibration for example may prevent correct recording of image data onto the disc 10. If such an abnormal condition occurs, it is detected by the rotational error detector 7 which notifies the rotational error controller 5 contained in the buffer controller 4 of the detected abnormal condition.

Upon receiving the abnormal condition, the rotational error controller 5 outputs a control signal to the buffer controller 4 to instruct the buffer controller to control the pointer 6. Based on the control signal, the buffer controller 4 controls the read pointer (RP) of the pointer 6 so that the one-track image data read and recorded onto the disc 10 when the abnormal rotational condition has been detected on the disc 10 is read again from the track buffer 3.

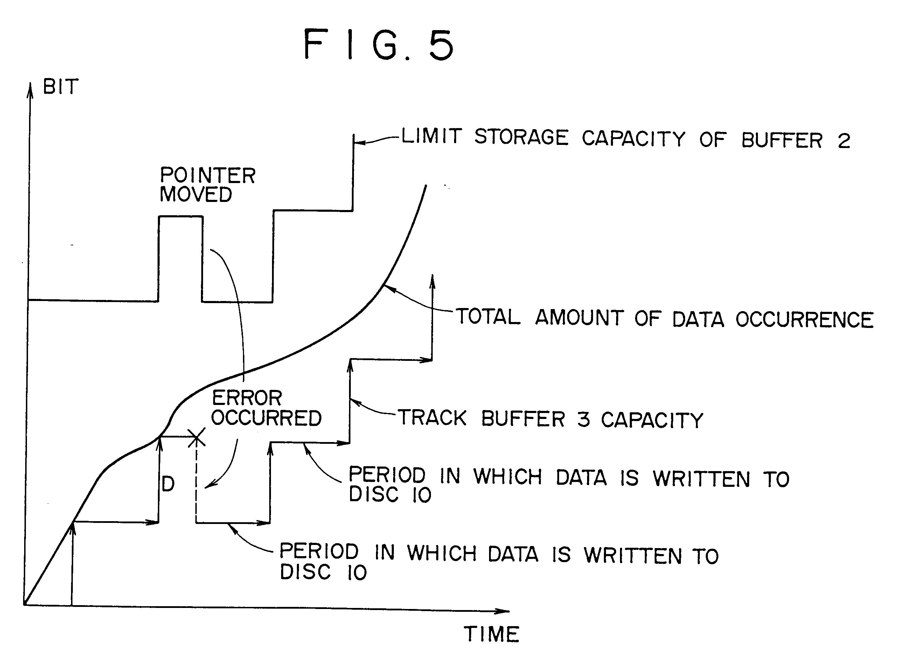

That is, as shown in Fig. 5 for example, if the abnormal rotational condition is detected while recording one-track image data D stored in the track buffer 3 onto the disc 10 (in a period indicated by "x" in Fig. 5), the read pointer (RP) of the pointer 6 is moved to a start address of the image data D stored in the track buffer 3. At the same time, the head driver 15 moves the recording head, not shown, of the modulator/recorder 9 to an image data D recording start position.

Then, the image data D is read from the track buffer 3 again to be recorded onto the disc 10.

In this case, a storage area, in the buffer 2, served as the track buffer 3 which has stored the image data D is not freed because of the rereading of the image data D, thereby decrementing the limit storage capacity of the buffer 2 by an amount of one-track image data.

Thus, rereading the image data from the track buffer 3 upon detection of the abnormal rotational condition on the disc 10 provides correct recording of the image data onto the disc.

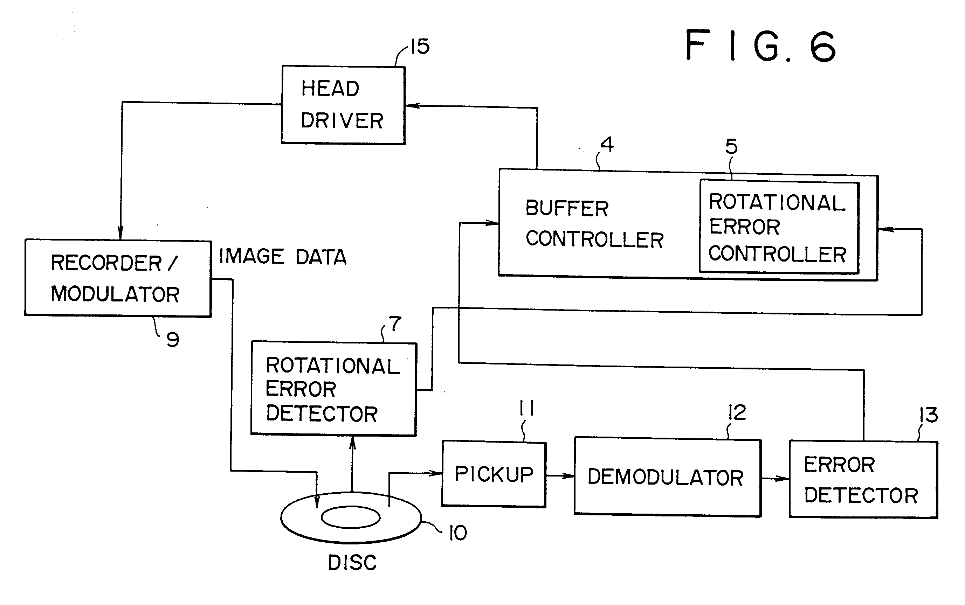

Now, referring to Fig. 6, the data recording apparatus practiced as the first embodiment of the invention can be provided with a pickup 11 for reproducing the image data recorded on a disc 10, a demodulator 12 for demodulating an output of the pickup 11, and an error detector 13 for detecting an error from an output, namely image data, coming from the demodulator 12 based on an error correction code added to the image data, thereby providing a second embodiment of the invention.

In the second embodiment, image data recorded on the disc 10 is instantaneously reproduced by the pickup 11 to be demodulated in the demodulator 12. The output of the demodulator 12 is detected for an error by the error detector 13. If an error is found in the output (the image data) of the demodulator 12, the error detector 13 sends an error detection signal to the rotational error controller 5.

When the error detection signal is received by the rotational error controller 5, the buffer controller 4 controls the read pointer (RP) of the pointer 6 of Fig. 2 so that the image data from which the error has been detected is read again from the track buffer 3. At the same time, the head driver 15 moves the recording head, not shown, of a recorder/modulator 9 to a position at which recording of the data having the error started.

Then, the image data is read again from the track buffer 3 to be newly recorded onto the disc 10.

Thus, if an error is detected from the image data instantaneously reproduced from the disc 10, the image data is read again from the track buffer 3, thereby more correctly recording the image data than the first embodiment does.

It is apparent that, although, in the above-mentioned embodiments, image data is read and recorded in units of single tracks formed on the disc 10, it may also be read and recorded in units of a sector or a plurality of tracks.

It is also apparent that the disc 10 may be any of optical, magneto-optical, and magnetic type.

## Claims

1. A data recording apparatus for recording image data onto a recording medium (10), comprising:
storage means (2) for storing the image data;
read operation control means (46) for reading, each time said image data has been stored in said storage means by a predetermined amount, said image data by said predetermined amount;
recording means (9) for recording said image data read from said storage means onto said recording medium by said predetermined amount; and
abnormal condition detecting means (7, 13) for detecting an abnormal condition from said image data when recording said image data onto said recording medium by said predetermined amount;
wherein said read operation control means rereads said image data by said predetermined amount from said storage means in accordance with said abnormal condition detected by said abnormal condition detecting means.

2. A data recording apparatus as defined in claim 1, wherein said abnormal condition detecting means (7) is operable to detect an abnormal rotation of said recording medium.

3. A data recording apparatus as defined in claim 1 or 2, further comprising reproducing means (11, 12) for reproducing said image data recorded on said recording medium, and wherein the abnormal condition detecting means (13) is operable to detect said image data reproduced by said reproducing means.

4. A data recording apparatus as defined in any preceding claim, further comprising:
encoding means (1) for encoding an input image signal to generate said image data and output said image data to said storage means at a variable rate.

5. A data recording apparatus as defined in any preceding claim, further comprising:
moving means (15) for moving, in accordance with said rereading, said recording means to a position at which recording of said image data to be reread by said predetermined amount starts.

6. A data recording apparatus as defined in any preceding claim, wherein said storage means (2) is a ring buffer.

7. A data recording method for recording image data onto a recording medium (10), comprising the steps of:
storing the image data;
reading, each time said image data has been stored in a predetermined amount, said image data in said predetermined amount;
recording said read image data onto said recording medium by said predetermined amount;
detecting an abnormal condition from said image data of said predetermined amount when recording said image data onto said recording medium;
rereading said image data by said predetermined amount in accordance with said detected abnormal condition; and
rerecording said reread image data of said predetermined amount onto said recording medium.

8. A data recording method as defined in claim 7, wherein, in said abnormal condition detecting step, abnormal rotation of said recording medium is detected.

9. A data recording method as defined in claim 7 or 8, wherein, in said abnormal condition detecting step, said image data is reproduced from said recording medium, and an error from said reproduced image data is detected.

10. A data recording method as defined in any of claims 7 to 9, further comprising the steps of:
generating said image data by encoding an input image signal; and
outputting said image data at a variable rate.

11. A data recording method as defined in any of claims 7 to 10, further comprising the step of:
starting said rerecording at a position at which recording of said image data of said predetermined amount to be reread starts.

12. A recording medium formed by a method as defined in any of claims 7 to 11.
